# EUROPÄISCHE PATENTSCHRIFT

(11) **EP 2 333 249 B1**
(45) Veröffentlichungstag und Bekanntmachung des Hinweises auf die Patenterteilung: **11.09.2013**
(21) Anmeldenummer: 10187105.1
(22) Anmeldetag: 11.10.2010
(51) Int. Cl.: F01D 25/16, F02C 6/12

(54) **Lagergehäuse eines Turboladers**
Center housing of a turbocharger
Carter central d'un turbocompresseur

(30) Priorität: 14.12.2009 DE 102009058068
(43) Veröffentlichungstag der Anmeldung: 15.06.2011
(73) Patentinhaber: Bosch Mahle Turbo Systems GmbH & Co. KG, 70376 Stuttgart (DE)
(72) Erfinder: Ammon, Volkhard, 72124, Pliezhausen (DE)
(74) Vertreter: BRP Renaud & Partner

(56) Entgegenhaltungen:
- DE-U1-202008 014 925
- GB-A- 2 119 015
- US-A- 4 486 147

## Beschreibung

Die vorliegende Erfindung betrifft ein Lagergehäuse einer Ladeeinrichtung, insbesondere ein Lagergehäuse eines Abgasturboladers, gemäß dem Oberbegriff des Anspruchs 1. Die Erfindung betrifft außerdem eine mit einem derartigen Lagergehäuse ausgestatteten Ladeeinrichtung.

Aus der DE 20 2008 014925 U1 ist ein gattungsgemäßes Lagergehäuse mit einem Lagergehäusedeckel bekannt, über welchen ein Axiallager für eine Welle der Ladeeinrichtung in Axialrichtung fixiert ist. Eine Befestigung des Lagergehäusedeckels am Lagegehäuse erfolgt dabei über einen Sicherungsring, der im Montagezustand in einer radial geteilten, teilweisen im Lagergehäusedeckel und teilweise im Lagergehäuse ausgebildeten Nut angeordnet ist. Zusätzlich ist zwischen dem Axiallager und dem Lagergehäusedeckel ein Federelement vorgesehen, um einerseits eine federnde Vorspannung und andererseits einen gewissen Toleranzausgleich zu ermöglichen.

Aus der EP 0 599 520 B1 ist ein weiteres gattungsgemäßes Lagergehäuses bekannt, bei welchem ebenfalls ein Lagergehäusedeckel mittels eines Sicherungsring am Lagergehäuse befestigt wird.

Schließlich ist auch aus der WO 2008/042698 A1 ein Lagergehäuse für eine Ladeeinrichtung bekannt.

Die vorliegende Erfindung beschäftigt sich mit dem Problem, für ein Lagergehäuse der gattungsgemäßen Art, eine verbesserte oder zumindest eine alternative Ausführungsform anzugeben, die insbesondere konstruktiv einfacher aufgebaut ist.

Die Erfindung beruht auf dem allgemeinen Gedanken, bei einem Lagergehäuse einer Ladeeinrichtung, insbesondere bei einem Lagergehäuse eines Abgasturboladers, eine hinterschnittartige Ringnut vorzusehen, in welche ein federtellerartiges Sicherungselement, beispielsweise ein Sicherungsring, mit seinem Außenrand eingreift, wobei sich dieses federtellerartige Sicherungselement mit seinem Innenrand an einem Lagergehäuse abstützt und über diesen ein Axiallager für eine Welle der Ladeeinrichtung in Axialrichtung federnd vorspannt bzw. fixiert. Bei aus dem Stand der Technik bekannten Lagergehäusen wurde oftmals ein Sicherungsring und zusätzlich ein Federelement vorgesehen, wobei der Sicherungsring lediglich die axiale Fixierung des Lagergehäusedeckels und das üblicherweise zwischen dem Lagergehäusedeckel und dem Axiallager vorgesehene Federelement die axiale Vorspannung des Axiallagers zur Aufgabe hatten. Demzufolge waren bei aus dem Stand der Technik bekannten Lagergehäusen zumindest zwei Elemente zur Federbelastung und Fixierung des Axiallagers erforderlich, was bei dem erfindungsgemäßen Lagergehäuse nunmehr ausschließlich von einem einzigen Element, nämlich im federtellerartigen Sicherungselement bewirkt wird. Dieses federtellerartige Sicherungselement fixiert somit sowohl den Lagergehäusedeckel als auch das Axiallager in Axialrichtung und spannt zugleich den Lagergehäusedeckel axial gegen das Axiallager vor, so dass letzteres vorzugsweise über die gesamte Lebensdauer der Ladeeinrichtung zuverlässig in Position gehalten werden kann. Selbstverständlich kann dabei der Lagergehäusedeckel zusätzlich eine Verdrehsicherung aufweisen, welche eine Verdrehung desselben um seine Achse unterbindet. Mit dem erfindungsgemäßen Lagergehäuse ist es somit möglich, dieselben Wirkungen wie bei aus dem Stand der Technik bekannten Lagergehäusen zu erzielen, nämlich die axiale Fixierung und Federvorspannung des Axiallagers, nur konstruktiv deutlich einfacher und kostengünstiger.

Bei einer vorteilhaften Weiterbildung der erfindungsgemäßen Lösung, weist das Sicherungselement am Außenrand Radialeinschnitte auf, die den Außenrand in einzelne Schnapphaken unterteilen. Hierdurch lässt sich insbesondere ein Einbau des erfindungsgemäßen Sicherungselementes in das Lagergehäuse vereinfachen, da eine Einbaukraft, das heißt eine auf das Sicherungselement in Axialrichtung wirkende Druckkraft, deutlich reduziert werden kann. Die einzelnen Schnapphaken lassen sich dabei aufgrund der zwischen denen angeordneten Radialeinschnitte leichter verbiegen, als dies bei einem geschlossenen Außenrand der Fall wäre, wobei die Sicherungswirkung des federtellerartigen Sicherungselementes hierdurch nicht beeinträchtigt wird, da im Einbauzustand sämtliche Schnapphaken in die hinterschnittartige Ringnut eingreifen und dadurch das Sicherungselement an einem unbeabsichtigten Lösen zuverlässig hindern.

Zweckmäßig sind die Radialeinschnitte an einem radial inneren Ende ausgerundet. Derartige Ausrundungen bieten bruchmechanische Vorteile, da insbesondere die bei Kerben oder Kanten auftretenden spannungskritischen Zonen durch die Ausrundung vermieden werden können.

Bei einer weiteren vorteilhaften Ausführungsform der erfindungsgemäßen Lösung, weist der Lagergehäusedeckel zumindest eine Tasche auf, in welche ein Werkzeug zur Demontage des Sicherungselementes einführbar ist. Bei einer Wartung bzw. einem Austausch des Axiallagers ist es von Vorteil, sofern das Sicherungselement einfach entfernt und dadurch das Axiallager entnommen werden kann. Die zumindest eine am Lagergehäusedeckel vorgesehene Tasche ermöglicht dabei ein Hintergreifen des Sicherungselementes, welches daraufhin beispielsweise mit einem entsprechenden Hakenelement einfach aus der Hinterschnittverbindung herausgezogen werden kann. Die erfindungsgemäße Tasche kann dabei als einfache Ausnehmung ausgebildet und beispielsweise spanlos zusammen mit dem Lagergehäusedeckel hergestellt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Ansicht sowie eine Schnittdarstellung durch ein erfindungsgemäßes Lagergehäuse,
- Fig. 2: eine Detaildarstellung der linken Abbildung in Fig. 1,
- Fig. 3: zwei Ansichten eines Sicherungselementes mit erfindungsgemäß vorgesehenen Radialeinschnitten,
- Fig. 4: ein Sicherungselement bei einer anderen Ausführungsform sowie eine Schnittdarstellung und eine Ansicht eines Lagergehäuses mit einem derartigen Sicherungselement,
- Fig. 5: eine geschnittene Ansicht eines Lagergehäusedeckels,
- Fig. 6,7: weitere mögliche Ausführungsformen des Sicherungselements.

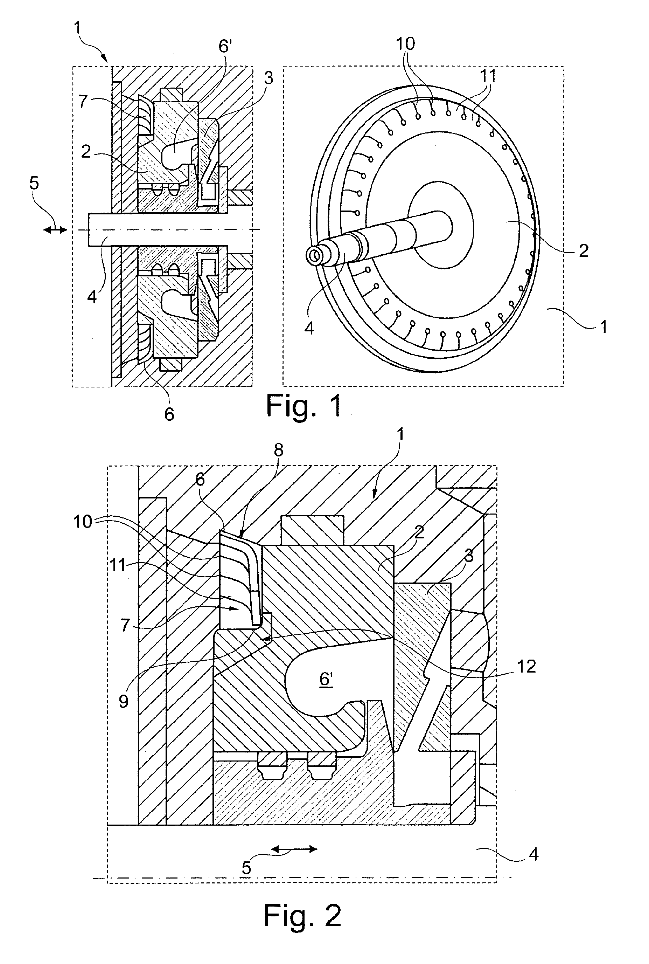

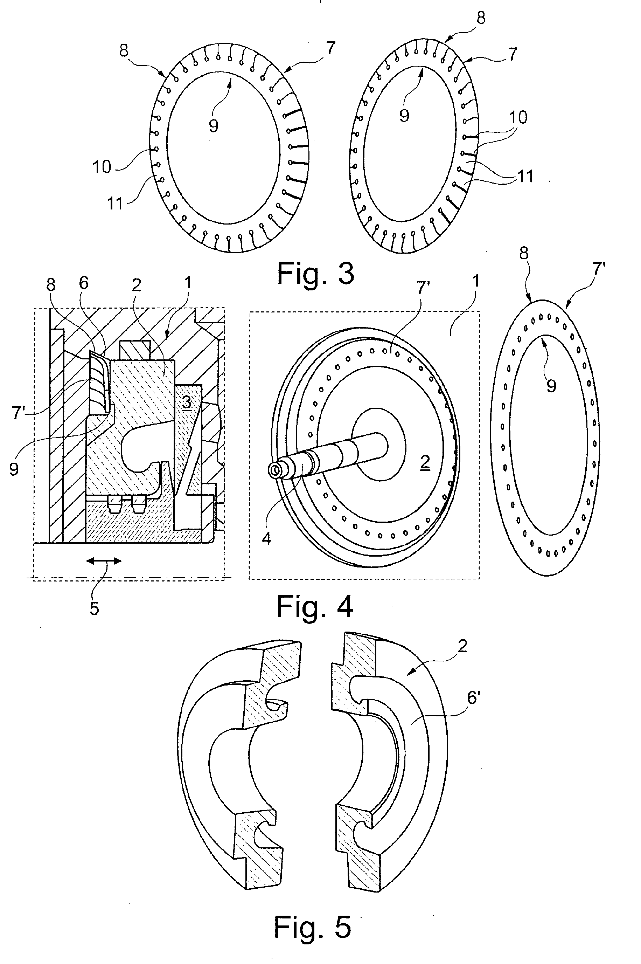

Entsprechend den Fig. 1, 2 und 4 weist ein erfindungsgemäßes Lagergehäuse 1 einer im Übrigen nicht dargestellten Ladeeinrichtung, beispielsweise eines Abgasturboladers, einen Lagergehäusedeckel 2 auf, über welchen ein Axiallager 3 für eine Welle 4 in Axialrichtung 5 fixiert ist. Das Lagergehäuse 1 weist dabei eine hinterschnittartige Ringnut 6 auf, in welche ein federtellerartiges Sicherungselement 7, 7' (vgl. insbesondere die Fig. 3 und die rechte Ansichtsdarstellung der Fig. 4) mit einem Außenrand 8 eingreift. Mit einem Innenrand 9 stützt sich das federtellerartige Sicherungselement 7, 7' am Lagergehäusedeckel 2 ab und spannt diesen gegen das Axiallager 3 bzw. gegen das Lagergehäuse 1 vor. Im Unterschied zu aus dem Stand der Technik bekannten Lagergehäusen, bei welchen ein Sicherungselement und ein Federelement separat ausgebildet sind, wird dies beim erfindungsgemäßen Lagergehäuse 1 gleichzeitig vom federtellerartigen Sicherungselement 7, 7' übernommen, wobei das Sicherungselement 7, 7' vorzugsweise derart ausgelegt ist, dass die zur einwandfreien Lagerung der Welle 4 erforderliche Vorspannkraft auf das Axiallager 3 über die gesamte Lebensdauer der Ladeeinrichtung erhalten bleibt. Die Ausbildung des Sicherungselementes 7,7' in der Art einer Tellerfeder ermöglicht auch das Aufbringen hoher Federkräfte über einen lediglich kurzen Weg.

Betrachtet man das Sicherungselement 7 gemäß den Fig. 1-3, so kann man erkennen, dass dieses am Außenrand 8 Radialeinschnitte 10 aufweist, die den Außenrand 8 in einzelne Schnapphaken 11 unterteilen. An einem radial inneren Ende dieser Radialeinschnitte 10 sind diese vorzugsweise ausgerundet, um insbesondere kritische Spannungsspitzen abzubauen bzw. abzufangen. Demgegenüber ist das Sicherungselement 7', wie es gemäß der Fig. 4 dargestellt ist, mit einem Außenrand 8 ausgestattet, der keine Radialeinschnitte 10 und damit auch keine Schnapphaken 11 aufweist. Der Außenrand 8 bei dem Sicherungselement 7' ist somit geschlossen ausgebildet.

Um das Sicherungselement 7, 7' insgesamt möglichst rationell und damit auch kostengünstig herstellen zu können, ist dieses vorzugsweise als Stahlblechformteil ausgebildet. Zur zuverlässigen Vorspannung des Axiallagers 3 ist das Sicherungselement 7, 7' sowohl kraft- als auch formschlüssig in das Lagergehäuse 1 eingebaut. Der Kraftschluss zwischen dem Sicherungselement 7, 7' und dem Lagergehäuse 1 wird dabei beispielsweise mittels eines Pressübermaßes erzielt.

Sowohl das Sicherungselement 7 als auch das Sicherungselement 7', sind an ihrem Außenrand 8 abgerundet ausgebildet, was insbesondere die Montage des jeweiligen Sicherungselementes 7, 7' deutlich vereinfacht, da nur eine geringere axiale Druckkraft beim Einschieben in das Lagergehäuse 1 erforderlich ist. Zugleich kann durch die abgerundete Ausbildung des Außenrandes 8 auch ein Widerstand gegen ein unbeabsichtigtes sich lösen des Außenrandes 8 aus der Ringnut 6 gewährleistet werden. Durch die abgerundete Ausbildung des Außenrandes 8 wird auch eine Selbstzentrierung es Sicherungselementes 7, 7' beim Einbau in das Lagergehäuse 1 erreicht, wodurch die Montage ebenfalls vereinfacht werden kann. Denkbar ist hierbei auch das Anbringen einer Fase zur Unterstützung der selbstzentrierenden Wirkung. Betrachtet man insbesondere die Fig. 2 und 4, so kann man erkennen, dass die Ringnut 6 im Wesentlichen komplementär zum Außenrand 8 des Sicherungselementes 7, 7' ausgebildet ist und dadurch bereits eine optimale Verbindung erzeugt.

In der Fig. 2 ist an dem Lagergehäusedeckel 2 eine Tasche 12 zu erkennen, in welche ein Werkzeug zur Demontage des Sicherungselementes 7, 7' eingeführt werden kann. Diese Tasche 12 ist dabei ebenso wie der gesamte Lagergehäusedeckel 2 vorzugsweise spanlos hergestellt.

Zur Montage des Sicherungselementes 7, 7' im Lagergehäuse 1 wird dieses zunächst unter Aufbringen einer Axialdruckkraft soweit in Richtung des Lagergehäusedeckels 2 gepresst, bis es mit seinem Außenrand 8, insbesondere mit den dort angeordneten Schnapphaken 11 in die lagergehäuseseitige Ringnut 6 eingreift. Der Formschluss wird dabei über den Außenrand 8, zumindest jedoch über zwei dort angeordnete Schnapphaken 11 erzielt, während der Kraftschluss beispielsweise über ein Pressübermaß erzeugt werden. Die von dem federtellerartig ausgebildeten Sicherungselement 7, 7' ausgeübte Vorspannkraft dient insbesondere zum Ausgleich von Axialtoleranzen, wobei bei einer Erhöhung dieser Vorspannkraft, beispielsweise durch Betriebskräfte, der Außenrand 8 stärker in die Ringnut 6 gedrückt wird, wodurch eine Selbstsicherung entsteht. Mit dem erfindungsgemäß ausgebildeten Sicherungselement 7, 7' können dadurch sehr hohe Haltekräfte erreicht werden.

Zur Demontage des Sicherungselementes 7, 7' wird ein hierfür erforderliches und nicht gezeigtes Werkzeug in die am Lagergehäusedeckel 2 vorgesehenen Taschen 12 eingeführt, welche das Sicherungselement 7, 7' hintergreifen und dadurch in der Lage sind, dieses aus der Ringnut 6 herauszuhebeln.

Da der Lagergehäusedeckel 2 vorzugsweise spanlos hergestellt wird, darf eine dort vorgesehene Ringnut 6' keinen Hinterschnitt aufweisen, sondern muss stattdessen Ausformungsschrägen besitzen.

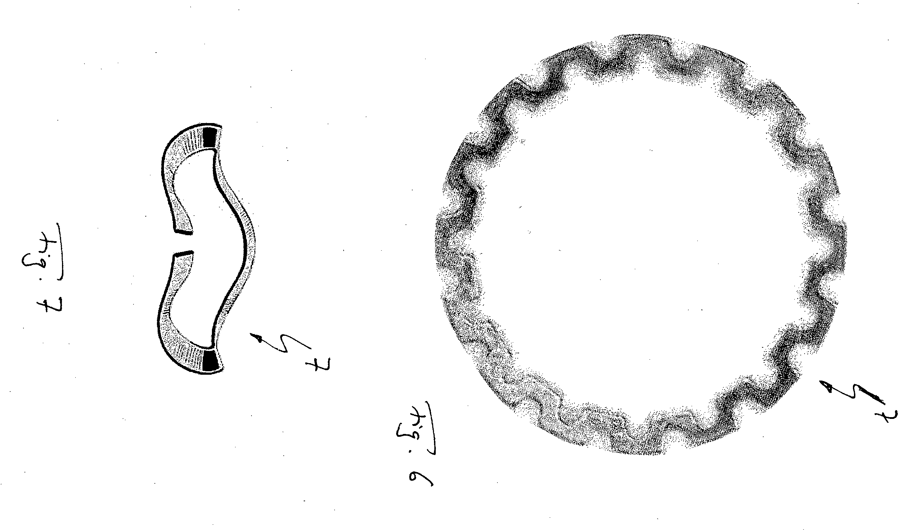

Das gemäß der Fig. 6 dargestellte Sicherungselement 7 weist eine im Querschnitt konische Form auf und dadurch in der Lage, Axialkräfte in der Art einer Tellerfeder aufzunehmen. Aufgrund seiner zick-zackförmigen Ausbildung (in Umfangsrichtung mäanderförmiger Verlauf) kann er ähnlich eines Sprengrings montiert werden, das heißt er besitzt eine zumindest geringfügige Nachgiebigkeit in radialer Richtung, obwohl er in Umfangsrichtung geschlossen ist.

Das Sicherungselement 7 gemäß der Fig. 7 ist in Umfangsrichtung offen, ähnlich einem Sprengring und weist eine wellfederartige Gestalt auf, ist also auch in der Lage Axialkräfte aufzunehmen.

Generell lassen sich mit dem erfindungsgemäßen Lagergehäuse 1 folgende wesentliche Vorteile erzielen:
- Entfall von Schrauben und dazugehörenden Bohrungen und Gewinden zum Befestigen des Lagergehäusedeckels 2,
- geringer Verzug von Wellendichtungsbohrungen,
- nur eine Dichtstelle,
- spanlose Fertigung des Lagergehäusedeckels 2 möglich,
- geringe Montage-, jedoch hohe Haltekräfte,
- einfache Montage,
- Ausgleich Wärmedehnungen möglich.

## Patentansprüche

1. Lagergehäuse (1) einer Ladeeinrichtung, insbesondere eines Abgasturboladers, mit einem Lagergehäusedeckel (2), über welchen ein Axiallager (3) für eine Welle (4) in Axialrichtung (5) fixiert ist, wobei
- das Lagergehäuse (1) eine hinterschnittartige Ringnut (6) aufweist,
**dadurch gekennzeichnet**,
- ein federtellerartiges Sicherungselement (7,7') vorgesehen ist, das den Lagergehäusedeckel (2) gegen das Axiallager (3) und/oder gegen das Lagergehäuse (1) vorspannt, indem es mit einem Außenrand (8) in die lagergehäuseseitige Ringnut (6) eingreift und sich mit einem Innenrand (9) am Lagergehäusedeckel (2) abstützt.

2. Lagergehäuse nach Anspruch 1,
**dadurch gekennzeichnet,**
**dass** das Sicherungselement (7) am Außenrand (8) Radialeinschnitte (10) aufweist, die den Außenrand (8) in einzelnen Schnapphaken (11) unterteilen.

3. Lagergehäuse nach Anspruch 2,
**dadurch gekennzeichnet,**
**dass** die Radialeinschnitte (11) an einem radial inneren Ende ausgerundet sind.

4. Lagergehäuse nach einem der Ansprüche 1 bis 3,
**dadurch gekennzeichnet,**
**dass** das Sicherungselement (7,7') als Stahlblechformteil ausgebildet ist.

5. Lagergehäuse nach einem der Ansprüche 1 bis 4,
**dadurch gekennzeichnet,**
**dass** das Sicherungselement (7,7') kraft- und/oder formschlüssig in das Lagergehäuse (1) eingebaut ist.

6. Lagergehäuse nach Anspruch 5,
**dadurch gekennzeichnet,**
**dass** der Kraftschluss zwischen dem Sicherungselement (7,7') und dem Lagergehäuse (1) mittels Pressübermaß erzielt wird.

7. Lagergehäuse nach einem der Ansprüche 1 bis 6,
**dadurch gekennzeichnet,**
**dass** das Sicherungselement (7,7') an seinem Außenrand (8) abgerundet ausgebildet ist oder eine Fase aufweist.

8. Lagergehäuse nach einem der Ansprüche 1 bis 7,
**dadurch gekennzeichnet,**
**dass** der Lagergehäusedeckel (2) zumindest eine Tasche (12) aufweist, in welche ein Werkzeug zur Demontage des Sicherungselements (7,7') einführbar ist.

9. Lagergehäuse nach einem der Ansprüche 1 bis 8,
**dadurch gekennzeichnet,**
**dass** der Lagergehäusedeckel (2) spanlos hergestellt ist.

10. Lagergehäuse nach einem der Ansprüche 1, 4 bis 6, 8, 9,
**dadurch gekennzeichnet,**
**dass** das Sicherungselement (7,7') eine wellfederartige Gestalt aufweist.

11. Lagergehäuse nach Anspruch 10,
**dadurch gekennzeichnet,**
**dass** das Sicherungselement (7,7') sprengringartig ausgebildet ist, insbesondere in Umfangsrichtung offen oder in Umfangsrichtung geschlossen, jedoch mit einem in Umfangsrichtung mäanderförmigen Verlauf, der eine zumindest geringe Nachgiebigkeit in Radialrichtung ermöglicht.

12. Ladeeinrichtung mit einem Lagergehäuse (1) nach einem der vorhergehenden Ansprüche.

## Claims

1. A bearing housing (1) of a charging device, in particular of an exhaust gas turbocharger with a bearing housing cover (2), via which an axial bearing (3) for a shaft (4) is fixed in axial direction (5), wherein the bearing housing (1) comprises an undercut-like angular groove (6),
**characterized in that**
- a disc spring-like locking element (7, 7') is provided, which preloads the bearing housing cover (2) against the axial bearing (3) and/or against the bearing housing (1), **in that** it engages with an outer edge (8) in the angular groove (6) on the bearing housing side and supports itself with an inner edge (9) on the bearing housing cover (2).

2. The bearing housing according to Claim 1, **characterized in that** the locking element (7) on the outer edge (8) has radial incisions (10), which divide the outer edge (8) into individual snap-hooks (11).

3. The bearing housing according to Claim 2, **characterized in that** the radial incisions (11) are rounded out at a radial inner end.

4. The bearing housing according to any one of the Claims 1 to 3, **characterized in that** the locking element (7, 7') is formed as a shaped sheet metal part.

5. The bearing housing according to any one of the Claims 1 to 4, **characterized in that** the locking element (7, 7') is non-positively and/or positively installed in the bearing housing (1).

6. The bearing housing according to Claim 5, **characterized in that** the non-positive connection between the locking element (7, 7') and the bearing housing (1) is achieved by means of a press oversize.

7. The bearing housing according to any one of the Claims 1 to 6, **characterized in that** the locking element (7, 7') is formed rounded on its outer edge (8) or comprises a chamfer.

8. The bearing housing according to any one of the Claims 1 to 7, **characterized in that** the bearing housing cover (2) comprises at least one pocket (12) in which a tool for disassembling the locking element (7, 7') can be inserted.

9. The bearing housing according to any one of the Claims 1 to 8, **characterized in that** the bearing housing cover (2) is produced in a non-cutting manner.

10. The bearing housing according to any one of the Claims 1, 4 to 6, 8, 9, **characterized in that** the locking element (7, 7') has a wave spring-like shape.

11. The bearing housing according to Claim 10, **characterized in that** the locking element (7, 7') is formed in the manner of a spring washer, in particular open in circumferential direction or closed in circumferential direction, however with a meander-like course in circumferential direction, which makes possible an at least slight resilience in radial direction.

12. A charging device with a bearing housing (1) according to any one of the preceding claims.

## Revendications

1. Carter central (1) d'un dispositif de palier, notamment d'un turbocompresseur de gaz d'échappement, comportant un couvercle de carter central (2), par l'intermédiaire duquel un palier axial (3) d'un arbre (4) est fixé dans la direction axiale (5), dans lequel le carter central (1) présente une rainure annulaire (6) de type contre-dépouille,
**caractérisé en ce que**
- un élément de fixation (7, 7') de type coupelle de ressort est prévu, qui contraint le couvercle de carter central (2) contre le palier axial (3) et/ou contre le carter central (1), en venant en prise avec le bord extérieur (8) dans la rainure annulaire (6) du côté du carter central et s'appuyant par un bord intérieur (9) sur le couvercle du carter central (2).

2. Carter central selon la revendication 1, **caractérisé en ce que** l'élément de fixation (7) présente sur le bord extérieur (8) des incisions radiales (10), qui divisent le bord extérieur (8) en crochets d'encliquetage (11) individuels.

3. Carter central selon la revendication 2, **caractérisé en ce que** les incisions radiales (11) sont arrondies à une extrémité radiale intérieure.

4. Carter central selon une des revendications 1 à 3, l'élément de fixation (7, 7') est conçu comme une pièce façonnée en tôle d'acier.

5. Carter central selon une des revendications 1 à 4, **caractérisé en ce que** l'élément de fixation (7, 7') est intégré par conjonction de force et/ou de forme dans le carter central (1).

6. Carter central selon la revendication 5, **caractérisé en ce que** la conjonction de force entre l'élément de fixation (7, 7') et le carter central (1) est produite au moyen d'une surdimension d'ajustement.

7. Carter central selon une des revendications 1 à 6, **caractérisé en ce que** l'élément de fixation (7, 7') est arrondi sur un bord extérieur (8) ou présente un chanfrein.

8. Carter central selon une des revendications 1 à 7, **caractérisé en ce que** le couvercle de carter central (2) présente au moins une poche (12), dans lequel un outil de démontage de l'élément de fixation (7, 7') peut être inséré.

9. Carter central selon une des revendications 1 à 8, **caractérisé en ce que** le couvercle de carter central (2) est fabriqué sans enlèvement de matière.

10. Carter central selon une des revendications 1,4 à 6, 8,9, **caractérisé en ce que** l'élément de fixation (7, 7') présente une forme de ressort ondulé.

11. Carter central selon la revendication 10, **caractérisé en ce que** l'élément de fixation (7, 7') est conçu comme une bague d'arrêt, notamment ouvert dans la direction circonférentielle ou fermé dans la direction circonférentielle, néanmoins avec un cours en méandre dans la direction circonférentielle, qui permet au moins une compliance minime dans la direction radiale.

12. Dispositif de charge comportant un carter central (1) selon une des revendications précédentes.
